# EUROPÄISCHE PATENTSCHRIFT

(11) **EP 1 736 695 B1**
(45) Veröffentlichungstag und Bekanntmachung des Hinweises auf die Patenterteilung: **09.07.2008**
(21) Anmeldenummer: 05405407.7
(22) Anmeldetag: 24.06.2005
(51) Int. Cl.: F16K 31/524

(54) **Ventil, insbesondere für eine Sanitärarmatur**
Valve, especially for a sanitary fitting
Vanne, notamment pour une robinetterie sanitaire

(43) Veröffentlichungstag der Anmeldung: 27.12.2006
(73) Patentinhaber: Weidmann Plastics Technology AG, 8640 Rapperswil (CH)
(72) Erfinder: Kaess, Henning, 8640 Rapperswil (CH); Hodel, Benjamin, 8640 Rapperswil (CH)
(74) Vertreter: Groner, Manfred

(56) Entgegenhaltungen:
- EP-A- 1 061 299
- DE-A1- 4 326 838
- US-A- 4 456 222
- US-A- 5 048 759
- US-A- 5 383 604
- US-A- 5 546 983

## Beschreibung

Die Erfindung betrifft ein Ventil nach dem Oberbegriff des Anspruchs 1.

Ein Ventil dieser Art ist im Stand der Technik beispielsweise aus der US-A-5,383,604 bekannt geworden. Das Ventil ist ein Umstellventil eines Brausekopfes. Der Ventilkörper kann zwischen zwei Positionen verschoben werden. In der einen Position ist ein Durchgang zu einem Strahlbildner und in der anderen Position ein Durchgang zu mehreren Düsen für die Bildung eines Brausestrahles offen. Zur Betätigung ist ein zweiarmiger Hebel vorgesehen, der unterhalb einer Membran angeordnet ist. Es sind zwei Tastpositionen vorgesehen, die im Abstand zueinander angeordnet und auf den einen bzw. den anderen Arm des zweiarmigen Hebels wirken. Zudem ist eine dritte Position (Pfeil C) vorgesehen, die es ermöglicht, eine eingestellte Position auch ohne Wasserdruck zu halten. Für dem Benutzer ist nicht ohne weiteres erkennbar, in welcher Stellung sich das Ventil befindet.

Durch die . US 2004/0112985 A ist ein Ventil bekannt geworden, das ebenfalls ein Umstellventil in einem Brausekopf ist. Die Betätigungsmittel weisen hier einen Hebel auf, der nach jeder Betätigung wieder in die Grundstellung bzw. Ruhestellung zurückgeht Für den Benutzer ist somit nicht erkennbar, in welcher Stellung das Ventil ist bzw. ob es auf Strahl oder Brause eingestellt ist. Zudem wird das Ventil beim Abstellen des Wassers und damit beim Unterbrechen des Wasserstromes selbsttätig wieder in die Grundstellung umgestellt.

Ein weiteres als Umstellventil ausgebildetes Ventil ist durch die EP-A-1 132 141 bekannt geworden. Auch hier fährt der Ventilkörper nach dem Abstellen des Wassers selbsttätig durch eine Feder in die Grundstellung zurück.

Die US-A-5,048,759 offenbart einen in einer Hand haltbaren Brausekopf, der für den Durchlass des Wassers ein Ventil aufweist, das durch Drücken einer Membran geöffnet und geschlossen werden kann. Ein Umstellen zwischen zwei Ausgängen ist nicht möglich.

Die DE-A-43 26 838 betrifft ein bistabiles elektromagnetisches Schaltsystem, mit einem Ventil, das mittels eines Politventils steuerbar ist. Das Ventil kann geöffnet und geschlossen werden.

Die US-A-5,546,983 offenbart ein Absperrventil, das durch Drücken einer Taste geöffnet und geschlossen werden kann. Mittels Rastmitteln kann ein Verschlusskörper in einer ersten oder zweite Position gehalten werden.

Die US-A-4,456,222 offenbart ein Absperrventil in einem Wasserhahn. Der Verschlusskörper ist eine Kugel, die mit einem Stift von einem Ventilsitz angehoben werden kann.

Weitere ähnliche Ventile sind im Stand der Technik durch die US 6,290,147, die US 6,045,062, die US 5,707,011 und die US 5,145,114 bekannt geworden.

Der Erfindung liegt die Aufgabe zugrunde, ein weiteres Ventil dieser Art zur Verfügung zu stellen, das sich insbesondere für einen Brausekopf eignet und das die genannten Nachteile vermeidet.

Die Aufgabe ist bei einem gattungsgemässen Ventil gemäss Anspruch 1 gelöst. Das erfindungsgemässe Ventil kann ähnlich einer Kugelschreiber-Mechanik bedient werden. In der Arbeitsstellung ist der Ventilkörper arretiert und geht beim Abstellen des Wassers nicht selbsttätig in die Grundstellung über. Das Ventil ist somit mit oder ohne Wasserdruck in der jeweiligen Stellung stabil, es ist somit keine Energie erforderlich, um die beiden Stellungen zu halten. Das erfindungsgemässe Ventil eignet sich deshalb auch für eine Betätigung, beispielsweise mit elektromagnetischen Mitteln oder dergleichen. Der Energieverbrauch kann hierbei klein gehalten werden, so dass beispielsweise solche elektromagnetischen Betätigungsmittel mit einer Batterie versorgt werden können.

Ein wesentlicher Vorteil des erfindungsgemässen Ventils wird darin gesehen, dass bei einer Betätigung von Hand mittels einer Taste eine Betätigung mit lediglich einer Betätigungsstelle möglich ist. Das Ventil kann damit durch Drücken an der gleichen Betätigungsstelle von der Grundstellung in die Arbeitsstellung und von der Arbeitsstellung in die Grundstellung gebracht werden. Eine Betätigung ist somit ähnlich wie bei einem Kugelschreiber möglich. Für die Bedienungsperson ist eine solche Betätigung ohne weiteres erkennbar und lernbar. In der Arbeitsstellung wird der Ventilkörper selbsttätig arretiert, so dass dazu nicht nochmals und an einer anderen Stelle gedrückt werden muss.

Ein weiterer Vorteil wird darin gesehen, dass das Ventil mit einer Taste betätigbar ist, die mit dem Ventilkörper fest verbunden ist und die in der Arbeitsstellung des Ventilkörpers eine Stellung einnimmt, die visuell von der Grundstellung unterscheidbar ist. Beispielsweise ist die Taste in der Grundstellung vorstehend und in der Arbeitsstellung bündig mit einem Gehäuse.

Nach einer Weiterbildung der Erfindung ist vorgesehen, dass am Wasserführungsrohr ein Umstellteil vorgesehen ist, das mit dem Ventilkörper zusammenarbeitet und welches diesen bei der Verschiebung von der Grundstellung in die Arbeitsstellung um einen vorbestimmten Winkel verdreht. Dieser Umstellteil könnte auch am Ventilgehäuse angeordnet sein. Dieser Umstellteil kann beispielsweise durch angespritzte Teile einfach und kostengünstig hergestellt werden. Vorzugsweise ist dieser Umstellteil so ausgebildet, dass er mit Schaltmitteln an einem vorderen Ende des Ventilkörpers zusammenarbeitet. Der Umstellteil lässt sich sehr einfach und kostengünstig als zahnförmige Ansätze an der Innenseite des Ventilgehäuses realisieren.

Nach einer Weiterbildung der Erfindung ist vorgesehen, dass das Ventil ein Schaltelement aufweist, in dem der Ventilkörper verschiebbar gelagert ist und das Steuerflächen aufweist, die mit den genannten Arretiermitteln zusammenarbeiten und den Ventilkörper in der Arbeitsstellung gegen die Kraft eines Federelementes halten. Ein solches Schaltelement kann besonders vorteilhaft als hülsenförmiges Teil hergestellt werden. Dieses Teil ist gemäss einer Weiterbildung der Erfindung mit dem Ventilgehäuse verbunden, beispielsweise in eine Ausnehmung des Ventilgehäuses eingesetzt.

Nach einer Weiterbildung der Erfindung ist vorgesehen, dass die Steuerflächen am Schaltelement so ausgebildet sind, dass sie den Ventilkörper vor dem Erreichen der Arbeitsstellung um einen vorbestimmten Winkel drehen, so dass bei einer nochmaligen Betätigung die Arretierung des Ventilkörpers gelöst wird und der Ventilkörper in seine Grundstellung verschiebbar ist. Das Lösen der Arretierung des Ventilkörpers in der Arbeitsstellung erfolgt gemäss dieser Weiterbildung durch ein nochmaliges Betätigen, wobei der Ventilkörper in der gleichen Richtung verschoben wird. Das Lösen kann hierbei mit einer vergleichsweise kleinen Verschiebung des Ventilkörpers gelöst werden.

Nach einer Weiterbildung der Erfindung ist vorgesehen, dass der Ventilkörper einen Ventilteller aufweist, der an einem Schaft des Ventilkörpers achsial verschiebbar und/oder drehbar gelagert ist. Dadurch ist es möglich, die Arbeitsstellung durch ein Überdrücken des Ventilkörpers wieder zu lösen. Hierbei ist es besonders zweckmässig, wenn gemäss einer Weiterbildung der Erfindung der Ventilteller gegenüber dem Schaft abgedichtet ist. Das Abdichten erfolgt vorzugsweise mit einem Dichtungsring, der in eine Nut des Schaftes eingelegt ist.

Das erfindungsgemässe Ventil ist gemäss der Erfindung ein Umstellventil, wobei der Ventilkörper in der Grundstellung an einem ersten Ventilsitz und in der Arbeitsstellung an einem zweiten Ventilsitz anliegt. In der einen Stellung des Ventilkörpers ist ein erster Durchgang und in der zweiten Stellung ein zweiter Durchgang frei.

Die Erfindung betrifft zudem eine Sanitärarmatur mit einem erfindungsgemässen Ventil. Dieses weist vorzugsweise wenigstens einen Brauseauslass und wenigsten einen Strahlauslass auf. Mit dem Ventil ist eine Umstellung zwischen Strahl und Brause besonders funktionssicher und einfach möglich.

Der Wasserauslauf ist nach einer Weiterbildung der Erfindung so ausgebildet, dass das Ventil in einem Gehäuse angeordnet ist und dass das Betätigungsmittel eine Taste ist, die in der Grundstellung am Gehäuse vorsteht und in der Arbeitsstellung mit der Aussenseite des Gehäuses im Wesentlichen bündig ist. Für den Benutzer ist damit die Arbeitsstellung visuell von der Grundstellung unterscheidbar. Da wie bereits erwähnt eine Betätigung an lediglich einer einzigen Betätigungsstelle möglich ist, ergibt sich damit ein Wasserauslauf, der sehr einfach und sicher betätigbar ist.

Der Wasserauslauf ist gemäss einer Weiterbildung der Erfindung als Brausekopf ausgebildet. Der Brausekopf kann an einer Duscharmatur oder an einer Armatur für ein Wasserbecken angeordnet sein.

Ein Ausführungsbeispiele der Erfindung werden nachfolgend anhand der Zeichnung näher erläutert. Es zeigen:
- Figur 1: ein Längsschnitt durch einen Wasserauslauf mit einem erfindungsgemässen Ventil,
- Figur 2: eine räumliche Ansicht des Wasserauslaufes gemäss Figur 1, wobei Teile des Ventils auseinandergezogen sind,
- Figur 3: eine weitere Ansicht des Wasserauslaufes mit dem Ventil im ausgebauten Zustand,
- Figur 4a: eine Ansicht des Ventilkörpers,
- Figur 4b: eine weitere Ansicht des Ventilkörpers,
- Figur 4c: eine weitere räumliche Ansicht des Ventilkörpers,
- Figur 4d: eine achsiale Ansicht des vorderen Endes des Ventilkörpers,
- Figur 4e: eine räumliche Ansicht des Ventilkörpers,
- Figur 5a: eine Ansicht eines Schaltelementes,
- Figur 5b: ein Schnitt durch das Schaltelement gemäss Figur 5a,
- Figur 5c: eine räumliche Ansicht des Schaltelementes,
- Figur 5d: eine weitere räumliche Ansicht des Schaltelementes,
- Figur 6: eine Ansicht des Ventilgehäuses,
- Figur 7: ein Schnitt durch einen Teil des Wasserauslaufs, wobei das Ventil in der Arbeitsstellung gezeigt ist und
- Figur 8: ein Schnitt gemäss Figur 7, wobei sich das Ventil in einer so genannten überdrückten Position befindet.

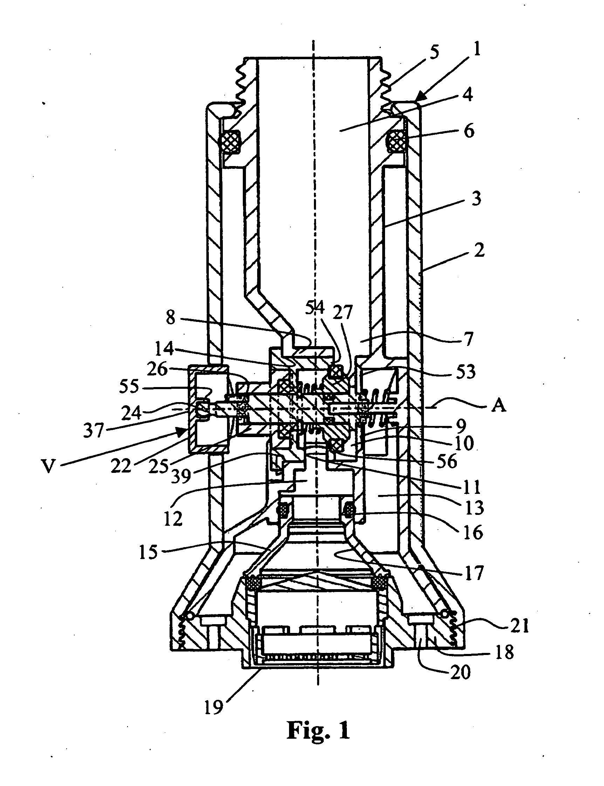

Die Figur 1 zeigt einen Brausekopf 1, der in einem Gehäuse 2 ein Wasserführungsrohr 3 aufweist, das an einem aus dem Gehäuse 2 herausragenden Ende ein Anschlussgewinde 5 zum Anschliessen des Brauskopfes 1 an eine hier nicht gezeigte flexible Wasserleitung aufweist. Der Brauskopf 1 ist insbesondere für eine Auszugsbrause vorgesehen, bei welcher die genannte Leitung so in einer Armatur geführt ist, dass der Brauskopf 1 von Hand ausgezogen werden kann.

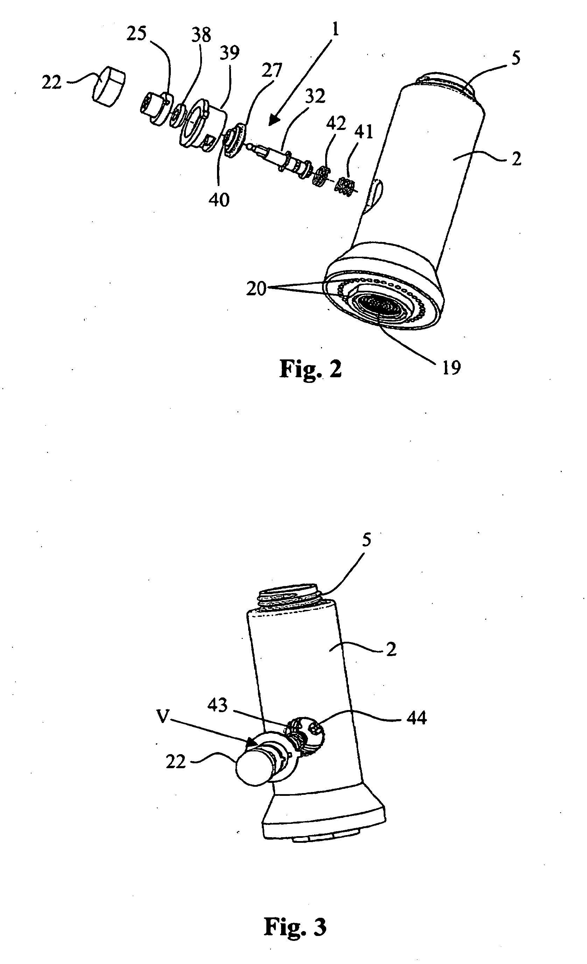

Das Wasserführungsrohr 3 ist mit einem Dichtungsring 6 gegenüber dem Gehäuse 2 abgedichtet und besitzt an einem vorderen Ende ein trichterförmiges Verbindungsteil 15, das mit einem Dichtungsring 16 gegenüber dem Wasserführungsrohr 3 abgedichtet ist. Der Verbindungsteil 15 verbindet das Wasserführungsrohr 3 mit einem an sich bekannten Strahlbildner 19. Der Strahlbildner 19 ist zentral in einen Mündungsteller 18 eingesetzt, der über ein Gewinde 21 lösbar mit dem Gehäuse 2 verbunden ist. An diesem Mündungsteller 18 sind zur Bildung eines Brausestrahls mehrere Düsen 20 ringförmig angeordnet, wie insbesondere die Figur 2 zeigt. Solche Düsen 20 sind dem Fachmann an sich bekannt.

Das Wasserführungsrohr 3 besitzt einen Wasserkanal 4, der über ein Ventil V wahlweise über einen Durchgang 12 mit dem Strahlbildner 19 oder über einen Durchgang 13 mit den Düsen 20 verbindbar ist. Der Durchgang 12 ist über einen Durchgang 17 des Verbindungsteils 15 mit dem Brauseeinsatz 19 verbunden. Das Ventil V ist ein Umstellventil, bei dem in der Grundstellung gemäss Figur 1 der Wasserkanal 4 mit den Düsen 20 verbunden ist. In der anderen Stellung, die hier als Arbeitsstellung bezeichnet wird, ist der Kanal 4 mit dem Strahlbildner 19 verbunden.

Das Ventil V besitzt ein Ventilgehäuse 39, das in eine Öffnung 14 des Wasserführungsrohres 3 dicht eingesetzt ist. Die Öffnung 14 wird durch eine Wandung 8 gebildet, die zudem Öffnungen 7, 9 und 11 aufweist. Die Öffnung 7 bildet einen Eingang zu einem Raum 10 und die Öffnung 11 einen Ausgang des Raumes 10 in den Durchgang 12. Die Öffnung 9 verbindet den Raum 10 mit dem Durchgang 13. Die Wandung 8 ist ein Teil des Wasserführungsrohres 3. Sie bildet einen Ventilsitz 53, mit dem ein Ventilkörper 26 zusammenarbeitet. Das Ventilgehäuse 39 bildet einen weiteren Ventilsitz 54, mit dem der Ventilkörper 26 ebenfalls zusammenarbeitet. Am Ventilgehäuse 39 ist ein Schaltelement 25 angeordnet, in dem der Ventilkörper 26 begrenzt in seiner Längsrichtung verschiebbar ist. Mit einem gummielastischen Dichtungselement 38 ist der Ventilkörper 26 gegenüber dem Gehäuse 39 und dem Schaltelement 25 abgedichtet. Das Ventil V ist gemäss Figur 3 über eine längliche Öffnung 43 des Gehäuses 2 in dieses eingesetzt. Die Öffnung 43 nimmt eine Taste 22 auf. Die Taste 22 ist als Druckknopf ausgebildet, der in Längsrichtung des Ventilkörpers 26 bewegbar ist. Grundsätzlich könnte die Taste 22 beispielsweise auch als einarmiger Schwenkhebel ausgebildet sein.

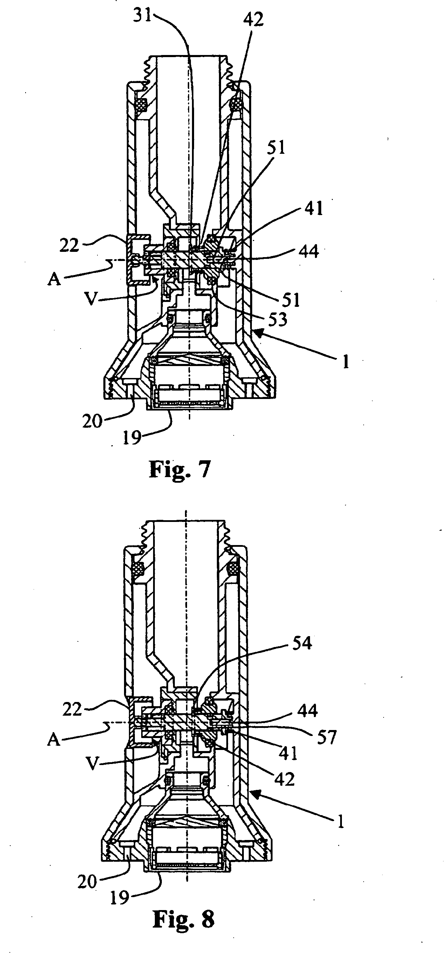

Der Ventilkörper 26 besitzt an einem vorderen Ende ein kugelförmiges Verbindungsteil 24, das in einen hülsenförmigen Halteteil 55 der Taste 22 drehbar eingerastet ist. Der hülsenförmige Halteteil 55 ist an einer Innenseite der Taste 22 angeformt. Der Ventilkörper 26 ist damit fest aber achsial drehbar mit der Taste 22 verbunden. In der gezeigten Stellung des Ventils V liegt gemäss Figur 1 ein Ventilteller 27 des Ventilkörpers 26 an dem Ventilsitz 54 an. Über dem Halteteil 55 befindet sich an der Aussenseite der Taste 22 eine Taststelle 37, an welcher die Taste 22 von Hand betätigbar ist. Die Betätigung erfolgt durch Drücken der Taste 22. Die Taste 22 gelangt hierbei aus der in Figur 1 gezeigten Grundstellung in die in Figur 7 gezeigte Arbeitsstellung. Der Ventilkörper 26 wird hierbei in seiner Längsrichtung gegen die rückwirkende Kraft einer ersten Feder 41 verschoben. Wie weiter unten näher erläutert wird, bleibt der Ventilkörper 26 in dieser Stellung arretiert. Die Taste 22 verbleibt ebenfalls in der in Figur 7 gezeigten Stellung, da sie wie erläutert fest mit dem Ventilkörper 26 verbunden ist. Wie ersichtlich, ist die Taste 22 mit ihrer Aussenseite im Wesentlichen bündig mit der Aussenseite des Gehäuses 2. In dieser Stellung ist der Wasserkanal 4 mit dem Strahlbildner 19 verbunden. Die Arbeitsstellung kann gelöst werden, indem die Taste 22 in gleicher Richtung nach innen in die in Figur 8 gezeigte Stellung um einen vergleichsweise kleinen Winkel verschwenkt wird. Der Ventilkörper 26 geht dann beim Loslassen der Taste 22 selbsttätig wieder in die Grundstellung gemäss Figur 1 zurück.

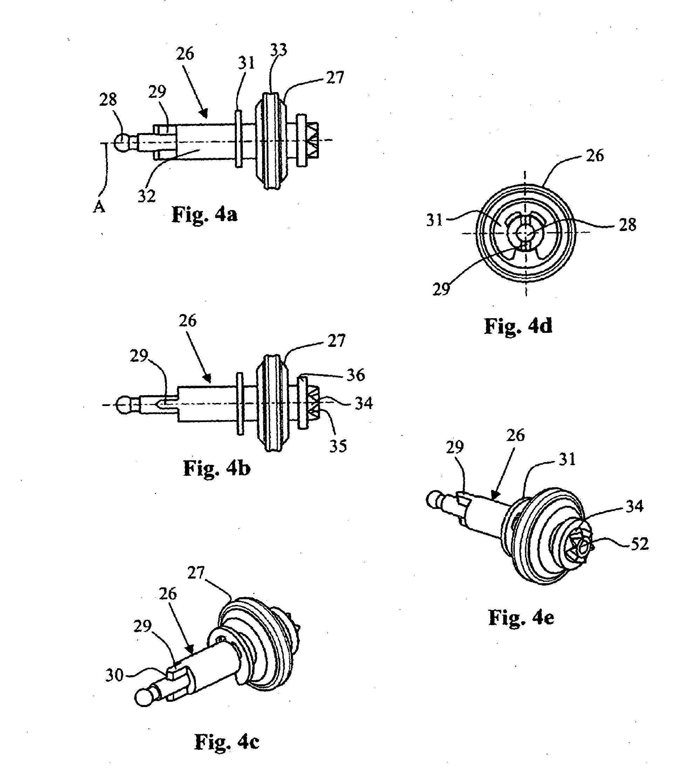

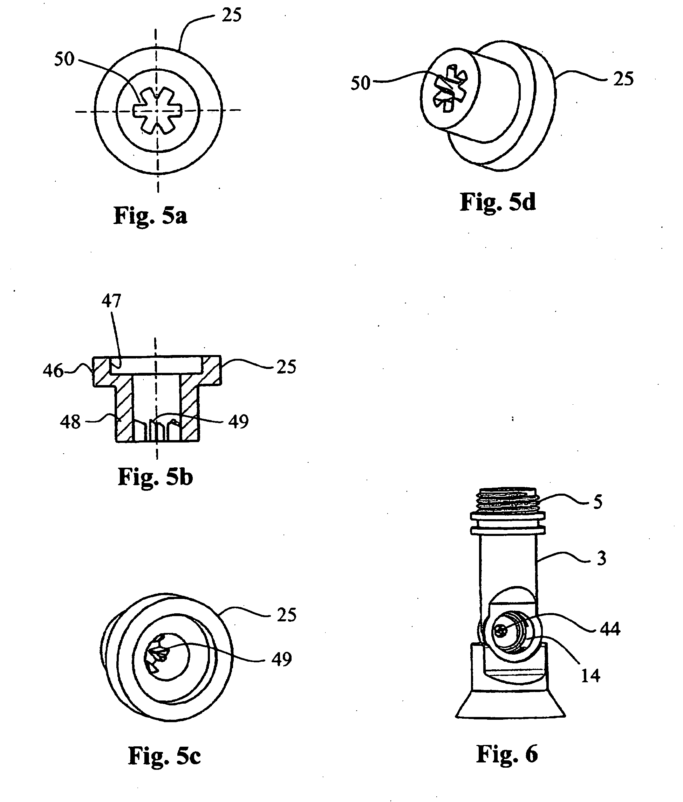

Der Ventilkörper 26 weist einen im Wesentlichen zylindrischen Schaft 32 auf, der an seiner Aussenseite in der Nähe des Verbindungsteils 28 zwei gegenüberliegende Schaltnocken 29 besitzt. Diese weisen jeweils gemäss Figur 4c eine Kante 30 auf, die radial nach aussen und zum Verbindungsteil 28 hin gerichtet sind. Die beiden Schaltnocken 29 sind in einer sternförmig ausgebildeten Ausnehmung 50 des Schaltelementes 25 (Figuren 5a bis 5c) in der Richtung einer Längsachse A verschiebbar geführt. In der Ausnehmung 50 sind Steuerflächen 49 angeordnet, die mit den Schaltnocken 29 zusammenarbeiten. Diese Steuerflächen 49 befinden sich an der Innenseite eines zylindrischen Ansatzes 48 des Schaltelementes 25. Am Ansatz 48 ist ein Flansch 46 angeformt, mit dem das Schaltelement 25 am Ventilgehäuse 39 befestigt ist. In einem Durchgang 47 ist das oben genannten Dichtungselement 38 eingesetzt. Die genannten Steuerflächen 49 bilden gemäss Figur 5c jeweils kerbenartige Vertiefungen, in welche in der Arbeitsstellung des Ventils V jeweils ein Schaltnocken 29 eingreift. Der Ventilkörper 26 ist hierbei aufgrund der Spannung der genannten ersten Feder 41 gegen diese Steuerflächen 49 gespannt. Die Steuerflächen 49 sind so asymmetrisch angeordnet, dass sie bei jedem Eingriff auf den Ventilkörper 26 eine bestimmte Drehung um die Längsachse des Ventilkörpers 26 bewirken.

Der Ventilkörper 26 weist an seinem vorderen Ende Schaltzähne 34 auf, die Schaltflächen 35 besitzen, welche geneigt zur Längsachse A verlaufen, wie dies beispielsweise in den Figuren 4b und 4e gezeigt ist. Diese Schaltzähne 34 sind kronenförmig um eine Vertiefung 52 angeordnet und arbeiten mit einem Umstellteil 44 zusammen, das an einer Innenseite des Wasserführungsrohres 3 angeformt ist. Der Umstellteil 44 wird durch vorstehende Nocken gebildet, zwischen denen ein Stift 51 angeordnet ist, der in die Vertiefung 52 eingreift. Dadurch ist das vordere Ende des Ventilkörpers 26 am Stift 51 und damit am Wasserführungsrohr 3 in Richtung der Längsachse A achsial verschiebbar und in Längsrichtung des Ventilkörpers 26 verdrehbar geführt. Aufgrund dieser Führung werden bei einer Verschiebung des Ventilkörpers 26 beim Übergang von der Grundstellung in die Arbeitsstellung die Schaltzähne 34 mit dem Umstellteil 44 in Eingriff gebracht. Dies wird nachfolgend näher erläutert.

Wird der Ventilkörper 26 von der in Figur 1 gezeigten Stellung in Richtung der Längsachse A durch Betätigen der Taste 22 in die in Figur 7 gezeigte Stellung verschoben, so verlassen die beiden gegenüberliegenden Schaltnocken 29 die Ausnehmung 50. Der Ventilkörper 26 wird in seiner Längsachse A so weit bewegt, bis die beiden Schaltnocken 29 die Ausnehmung verlassen haben. Unmittelbar anschliessend gelangen die Schaltzähne 34 in Eingriff mit dem Umstellteil 44, wodurch der Ventilkörper 26 um einen Winkel von beispielsweise 30° gedreht wird. Wird nun die Taste 22 losgelassen, so wird der Ventilkörper 26 aufgrund der Spannung der ersten Feder 41 um ein kurzes Stück in Richtung seiner Längsachse A zurückverschoben. Aufgrund der genannten Drehung des Ventilkörpers 26 gelangen die Schaltnocken 29 nun in Eingriff mit den Steuerflächen 49 des Schaltelements 25. Während dieses Eingriffes wird nun der Ventilkörper 26 aufgrund der genannten Asymmetrie wiederum um einen vorbestimmten Winkel gedreht. Die beiden Schaltnocken 29 liegen nun an den Steuerflächen 49 an, so dass diese den Ventilkörper 26 in der in Figur 7 gezeigten Stellung arretieren. Der Ventilkörper 26 kann somit nicht mehr in die in Figur 1 gezeigte Ausgangsstellung zurück. Die Taste 22, die mit dem Ventilkörper 26 verbunden ist, verbleibt aufgrund dieser Arretierung ebenfalls in der in Figur 7 gezeigten Stellung. Der Ventilteller 27 liegt hierbei am Ventilsitz 53 an, wobei die genannte zweite Feder 42 den Ventilteller 27 gegen diesen Ventilsitz 53 spannt. Die gespannte Feder 42 ist hierbei an einem Ring 31 abgestützt, der in eine hier nicht näher bezeichnete Nut des Schaftes 32 eingesetzt ist. Die Dichtung zwischen Ventilsitz 53 und Ventilteller 27 wird über einen Dichtungsring 56 gewährleistet, der in eine Nut 33 (Fig. 4a) des Ventiltellers 27 eingesetzt ist. Die Spannung der Feder 42 kann auch durch ein anderes geeignetes Anpresselement erreicht werden.

In der in Figur 7 gezeigten Stellung des Ventilkörper 26 gelangt das Wasser vom Wasserkanal 4 zum Strahlbildner 19. Der Durchgang zu den Düsen 20 ist durch den am Ventilsitz 53 anliegenden Ventilteller 27 geschlossen. Wird nun das Wasser an einem hier nicht gezeigten Hahn abgestellt, so dass kein Wasser mehr durch den Wasserkanal 4 fliesst, so verbleibt der Ventilkörper 26 in der in Figur 7 gezeigten Stellung. Ebenfalls verbleibt die Taste 22 in der gezeigten Stellung. Wird der hier nicht gezeigte Hahn wieder geöffnet, so fliesst wiederum Wasser vom Wasserkanal 4 zum Brauseeinsatz 19.

Um das Ventil V wieder in die in Figur 1 gezeigte Grundstellung umzuschalten, wird die Taste 22 von der in Figur 7 gezeigten Stellung in die in Figur 8 gezeigte Stellung verschwenkt. Entsprechend wird der Ventilkörper 26 nach innen bewegt. Die beiden Federn 42 und 41 werden hierbei weiter gespannt und der Stift 51 dringt weiter in die Vertiefung 52 ein. Der Ventilteller 27 kann diese Bewegung nicht mitmachen und verbleibt auf dem Ventilsitz 53. Der Ventilteller 27 ist deshalb auf dem Ventilkörper 26 begrenzt verschiebbar, wobei ein Dichtungsring 57 an einer Öffnung 40 des Ventiltellers 27 anliegt. In der Stellung gemäss Figur 1 spannt die Feder 41 mit dem Ring 36 den Ventilteller 27 gegen den Ventilsitz 54. Der Schaft 32 des Ventilkörpers 26 verschiebt sich entsprechend relativ zum Ventilteller 27 von der in Figur 7 gezeigten Stellung in die in Figur 8 gezeigte Stellung. Gleichzeitig mit der genannten Verschiebung des Ventilkörpers 26 in Richtung der Längsachse A wird der Ventilkörper 26 durch den Eingriff der Schaltzähne 34 mit dem Umstellteil 44 um einen bestimmten Winkel um seine Längsachse A gedreht. Die Schaltnocken 29 werden entsprechend gedreht, so dass beim Loslassen der Taste 22 diese Schaltnocken 29 nicht mehr in Eingriff mit den Steuerflächen 49 des Schaltelementes 25 gelangen. Beim Loslassen der Taste 22 wird somit der Ventilkörper 26 zusammen mit der Taste 22 durch die Spannung der ersten Feder 41 wieder in die in Figur 1 gezeigte Stellung verschoben. Der Ventilteller 27 verschiebt sich hierbei auf dem Schaft 32 und gelangt ebenfalls wieder in die in Figur 1 gezeigte Stellung, in welcher er am Ventilsitz 54 anliegt und damit den Durchgang vom Wasserkanal 4 zum Durchgang 12 unterbricht. Das Wasser fliesst nun vom Wasserkanal 4 über den Raum 10 in den Durchgang 13 und damit zu den Düsen 20. Die Taste 22 ist nun in der vorstehenden Position wie in Figur 1 gezeigt. Diese vorstehende Position kann von der in Figur 7 gezeigten gedrückten Position visuell klar unterschieden werden.

Die Taste 22 kann auch durch ein anderes Betätigungsmittel ersetzt sein. Beispielsweise kann der Ventilkörper 26 mit einem an sich bekannten elektromagnetischen Antrieb wie oben erläutert verschoben werden. Da beide genannten Stellungen stabil sind, ist lediglich eine Leistung zum Umstellen erforderlich. Aufgrund eines solchen Antriebs ist beispielsweise eine berührungslose Betätigung möglich. Grundsätzlich können auch andere Antriebsmittel, beispielsweise hydraulische oder pneumatische Antriebe und dergleichen vorgesehen sein, um den Ventilkörper 26 wie oben erläutert zu betätigen.

Das Ventil V ist bei der gezeigten Ausführung ein Umstellventil.

### Bezugszeichenliste

- 1: Brausekopf
- 2: Gehäuse
- 3: Wasserführungsrohr
- 4: Wasserkanal
- 5: Anschlussgewinde
- 6: Dichtungsring
- 7: Öffnung
- 8: Wandung
- 9: Öffnung
- 10: Raum
- 11: Öffnung
- 12: Durchgang
- 13: Durchgang
- 14: Öffnung
- 15: Verbindungsteil
- 16: Dichtungsring
- 17: Durchgang
- 18: Mündungsteller
- 19: Strahlbildner
- 20: Düse
- 21: Gewinde
- 22: Taste

- 24: Verbindungsteil
- 25: Schaltelement
- 26: Ventilkörper
- 27: Ventilteller
- 28: Verbindungsteil
- 29: Schaltnocken
- 30: Kante
- 31: Ring
- 32: Schaft
- 33: Nut
- 34: Schaltzahn
- 35: Schaltfläche
- 36: Ring
- 37: Taststelle
- 38: Dichtungselement
- 39: Ventilgehäuse
- 40: Öffnung
- 41: erste Feder
- 42: zweite Feder
- 43: Ausnehmung
- 44: Umstellteil

- 46: Flansch
- 47: Durchgang
- 48: Ansatz
- 49: Steuerfläche
- 50: Ausnehmung
- 51: Stift
- 52: Vertiefung
- 53: Ventilsitz
- 54: Ventilsitz
- 55: Halteteil
- 56: Dichtungsring
- 57: Dichtungsring
- A: Längsachse
- V: Ventil

## Patentansprüche

1. Umstellventil, insbesondere für eine Sanitärarmatur, mit einem Ventilgehäuse (39), in dem ein Ventilkörper (26) verschiebbar gelagert ist und das zwei Ventilsitze (53,54) aufweist, mit denen der Ventilkörper (26) zum Öffnen und Schliessen eines ersten und eines zweiten Fluiddurchgangs zusammenarbeitet, und mit Betätigungsmitteln (22), die mit dem Ventilkörper (26) wirkverbunden sind und mit denen der Ventilkörper (26) von einer Grundstellung in eine Arbeitsstellung verschiebbar ist, wobei der Ventilkörper (26) in der Grundstellung den ersten Durchgang und in der Arbeitsstellung den zweiten Durchgang verschliesst, **dadurch gekennzeichnet, dass** Arretierungsmittel (29, 49) vorgesehen sind, welche den Ventilkörper (26) selbsttätig in der Arbeitsstellung lösbar arretieren und der Ventilkörper (26) zu seiner Arretierung um seine Längsachse (A) gedreht wird.

2. Umstellventil nach Anspruch 1, **dadurch gekennzeichnet, dass** der Ventilkörper (26) zum Lösen der Arretierung in seiner Längsachse (A) zum Ventilsitz (53, 54) hin bewegt wird.

3. Umstellventil nach Anspruch 1 oder 2, **dadurch gekennzeichnet, dass** der Ventilkörper (26) drehbar mit den Betätigungsmitteln (22)verbunden ist.

4. Umstellventil nach einem der Ansprüche 1 bis 3, **dadurch gekennzeichnet, dass** an einem Wasserführungsrohr (3) ein Umstellteil (44) angeordnet ist, der mit dem Ventilkörper (26) zusammenarbeitet und diesen bei seiner Verschiebung von der Grundstellung in die Arbeitsstellung um einen vorbestimmten Winkel verdreht.

5. Umstellventil nach Anspruch 4, **dadurch gekennzeichnet, dass** der Umstellteil (44) mit Schaltmitteln (34) an einem vorderen Ende des Ventilkörpers (26) zusammenarbeitet.

6. Umstellventil nach Anspruch 5, **dadurch gekennzeichnet, dass** die Schaltmittel (34) am vorderen Ende des Ventilkörpers (26) zahnförmige Ansätze aufweisen, die achsial vorstehen.

7. Umstellventil nach einem der Ansprüche 4 bis 6, **dadurch gekennzeichnet, dass** der Umstellteil (44) nockenförmig vorstehende Teile sind, zwischen denen zur Führung des Ventilkörpers (26) ein Stift (51) vorsteht, der in eine Ausnehmung (52) des Ventilkörpers (26) eingreift.

8. Umstellventil nach einem der Ansprüche 1 bis 7, **dadurch gekennzeichnet, dass** am Ventilgehäuse (39) ein Schaltelement (25) angeordnet ist, in welchem der Ventilkörper (26) verschiebbar ist und das Steuerflächen (49) aufweist, die mit den Arretiermitteln (29) zusammenarbeiten, wobei diese Arretiermittel (29) am Ventilkörper (26) angeordnet sind und den Ventilkörper (26) in der Arbeitsstellung gegen die Kraft eines Federelementes (41) halten.

9. Umstellventil nach Anspruch 8, **dadurch gekennzeichnet, dass** das Schaltelement (25) hülsenförmig ausgebildet ist.

10. Umstellventil nach Anspruch 8 oder 9, **dadurch gekennzeichnet, dass** das Schaltelement (25) mit Dichtungsmitteln (38) gegenüber dem Ventilkörper (26) abgedichtet ist.

11. Umstellventil nach einem der Ansprüche 8 bis 10, **dadurch gekennzeichnet, dass** die Steuerflächen (49) des Schaltelementes (25) so ausgebildet sind, dass sie den Ventilkörper (26) vor dem Erreichen der Arbeitsstellung um einen vorbestimmten Winkel drehen, so dass bei einer nochmaligen Betätigung die Arretierung des Ventilkörpers (26) gelöst wird und der Ventilkörper (26) in seine Grundstellung verschiebbar ist.

12. Umstellventil nach einem der Ansprüche 1 bis 11, **dadurch gekennzeichnet, dass** der Ventilkörper (26) gegen die rückwirkende Kraft eines Federelementes (41) von der Grundstellung in die Arbeitsstellung verschiebbar ist.

13. Umstellventil nach einem der Ansprüche 1 bis 12, **dadurch gekennzeichnet, dass** der Ventilkörper (26) einen Ventilteller (27) aufweist, der an einem Schaft (32) des Ventilkörpers (26) achsial verschiebbar und/oder drehbar gelagert ist.

14. Umstellventil nach Anspruch 13, **dadurch gekennzeichnet, dass** der Ventilteller (27) gegenüber dem Schaft (32) verschiebbar abgedichtet ist.

15. Umstellventil nach Anspruch 13 oder 14, **dadurch gekennzeichnet, dass** am Schaft (32) des Ventilkörpers (26) ein Federelement (42) angeordnet ist, das mit dem Ventilteller (27) wirkverbunden ist und das den Ventilteller (27) in der Arbeitsstellung des Ventils (V) gegen einen Ventilsitz (53) spannt.

16. Sanitärarmatur mit einem Umstellventil (V) nach einem der Ansprüche 1 bis 15.

17. Sanitärarmatur nach Anspruch 16, **dadurch gekennzeichnet, dass** das Umstellventil (V) in einem Gehäuse (2) angeordnet ist und dass die Betätigungsmittel (22) eine Taste aufweisen, die in der Grundstellung am Gehäuse (2) vorsteht und in der Arbeitsstellung mit der Aussenseite des Gehäuses (2) im Wesentlichen bündig ist.

18. Sanitärarmatur nach Anspruch 17 oder 18, **dadurch gekennzeichnet, dass** sie einen Brausekopf aufweist, in welchem das Umstellventil (V) angeordnet ist.

19. Brausekopf mit einem Umstellventil (V) nach einem der Ansprüche 1 bis 15.

## Claims

1. A change-over valve, in particular for a sanitary fitting, with a valve housing (39), in which a valve body (26) is mounted displaceably and which has two valve seats (53, 54), with which the valve body (26) interacts for opening and closing a first and a second fluid passage, and with actuating means (22), which are operationally connected to the valve body (26) and with which the valve body (26) can be displaced from a basic position into a working position, wherein the valve body (26) closes the first passage in the basic position and the second passage in the working position, **characterized in that** locking means (29, 49) are provided, which automatically lock the valve body (26) releasably in the working position and that the valve body (26) is for its locking rotated about its longitudinal axis (A).

2. The change-over valve as claimed in claim 1, **characterized in that** the valve body (26) is for releasing the locking moved on its longitudinal axis (A) toward the valve seat (53, 54).

3. The change-over valve as claimed in claim 1 or 2, **characterized in that** the valve body (26) is connected rotatably to the actuating means (22).

4. The change-over valve as claimed in one of claims 1 to 3, **characterized in that** a change-over part (44), which interacts with the valve body (26) and rotates the latter by a predetermined angle when its displacement from the basic position into the working position takes place, is arranged on a water-conveying pipe (3).

5. The change-over valve as claimed in claim 4, **characterized in that** the change-over part (44) interacts with operating means (34) at a front end of the valve body (26).

6. The change-over valve as claimed in claim 5, **characterized in that** the operating means (34) at the front end of the valve body (26) comprise tooth-shaped projections, which project axially.

7. The change-over valve as claimed in one of claims 4 to 6, **characterized in that** the change-over part (44) is parts projecting in a cam shape, between which, for guiding the valve body (26), a pin (51) projects, which engages in a recess (52) of the valve body (26).

8. The change-over valve as claimed in one of claims 1 to 7, **characterized in that** an operating element (25), in which the valve body (26) is displaceable and which has control surfaces (49), which interact with the locking means (29), is arranged on the valve housing (39), these locking means (29) being arranged on the valve body (26) and holding the valve body (26) in the working position counter to the force of a spring element (41).

9. The change-over valve as claimed in claim 8, wherein the operating element (25) is of sleeve-shaped design.

10. The change-over valve as claimed in claim 8 or 9, **characterized in that** the operating element (25) is sealed with sealing means (38) in relation to the valve body (26).

11. The change-over valve as claimed in one of claims 8 to 10, wherein the control surfaces (49) of the operating element (25) are designed in such a way that they rotate the valve body (26) by a predetermined angle before the working position is reached, so that, when renewed actuation takes place, the locking of the valve body (26) is released and the valve body (26) can be displaced into its basic position.

12. The change-over valve as claimed in one of claims 1 to 11, **characterized in that** the valve body (26) can be displaced from the basic position into the working position counter to the reacting force of a spring element (41).

13. The change-over valve as claimed in one of claims 1 to 12, **characterized in that** the valve body (26) has a valve disk (27), which is mounted axially displaceably and/or rotatably on a stem (32) of the valve body (26).

14. The change-over valve as claimed in claim 13, **characterized in that** the valve disk (27) is sealed displaceably in relation to the stem (32).

15. The change-over valve as claimed in claim 13 or 14, **characterized in that** a spring element (42), which is operationally connected to the valve disk (27) and in the working position of the valve (V) stresses the valve disk (27) against a valve seat (53), is arranged on the stem (32) of the valve body (26).

16. A sanitary fitting with a change-over valve (V) as claimed in one of claims 1 to 15.

17. The sanitary fitting as claimed in claim 16, **characterized in that** the change-over valve (V) is arranged in a housing (2) and the actuating means (22) comprise a button, which projects on the housing (2) in the basic position and is essentially flush with the outer side of the housing (2) in the working position.

18. The sanitary fitting as claimed in claim 16 or 17, **characterized in that** it comprises a spray head, in which the valve (V) is arranged.

19. A spray head with a change-over valve (V) as claimed in one of claims 1 to 15.

## Revendications

1. Vanne d'inversion, notamment pour une robinetterie sanitaire, comprenant un boîtier de vanne (39) dans lequel est monté un corps de vanne (26) déplaçable, et qui présente deux sièges de vanne (53, 54) avec lesquels le corps de vanne (26) coopère pour l'ouverture et la fermeture d'un premier et d'un deuxième passage fluidique, et comprenant des moyens d'actionnement (22) qui sont en liaison coopérante avec le corps de vanne (26) et avec lesquels le corps de vanne (26) peut être déplacé d'une position de base dans une position de travail, le corps de vanne (26) fermant le premier passage dans la position de base et fermant le deuxième passage dans la position de travail, **caractérisée en ce que** l'on prévoit des moyens de blocage (29, 49) qui bloquent de manière desserrable le corps de vanne (26) automatiquement dans la position de travail et **en ce que** le corps de vanne (26) est tourné autour de son axe longitudinal (A) en vue de son blocage.

2. Vanne d'inversion selon la revendication 1, **caractérisée en ce que** le corps de vanne (26) est déplacé suivant son axe longitudinal (A) vers le siège de vanne (53, 54) pour desserrer le blocage.

3. Vanne d'inversion selon la revendication 1 ou 2, **caractérisée en ce que** le corps de vanne (26) est connecté de manière rotative aux moyens d'actionnement (22).

4. Vanne d'inversion selon l'une quelconque des revendications 1 à 3, **caractérisée en ce qu'**un organe d'inversion (44) est disposé sur un tuyau d'alimentation en eau (3), qui coopère avec le corps de vanne (26) et qui le fait tourner d'un angle prédéterminé lors de son déplacement de la position de base dans la position de travail.

5. Vanne d'inversion selon la revendication 4, **caractérisée en ce que** l'organe d'inversion (44) coopère avec des moyens de commutation (34) à une extrémité avant du corps de vanne (26).

6. Vanne d'inversion selon la revendication 5, **caractérisée en ce que** les moyens de commutation (34) présentent, à l'extrémité avant du corps de vanne (26), des saillies en forme de dents qui dépassent axialement.

7. Vanne d'inversion selon l'une quelconque des revendications 4 à 6, **caractérisée en ce que** l'organe d'inversion (44) est constitué par des organes saillants en forme de cames, entre lesquels dépasse une goupille (51) pour guider le corps de vanne (26), laquelle vient en prise dans un évidement (52) du corps de vanne (26).

8. Vanne d'inversion selon l'une quelconque des revendications 1 à 7, **caractérisée en ce qu'**un élément de commutation (25) est disposé sur le boîtier de vanne (39), dans lequel le corps de vanne (26) peut se déplacer et qui présente des surfaces de commande (49), qui coopèrent avec les moyens de blocage (29), ces moyens de blocage (29) étant disposés sur le corps de vanne (26) et retenant le corps de vanne (26) dans la position de travail à l'encontre de la force d'un élément de ressort (41).

9. Vanne d'inversion selon la revendication 8, **caractérisée en ce que** l'élément de commutation (25) est réalisé en forme de douille.

10. Vanne d'inversion selon la revendication 8 ou 9, **caractérisée en ce que** l'élément de commutation (25) est isolé hermétiquement vis-à-vis du corps de vanne (26) par des moyens d'étanchéité (38).

11. Vanne d'inversion selon l'une quelconque des revendications 8 à 10, **caractérisée en ce que** les surfaces de commande (49) de l'élément de commutation (25) sont réalisées de telle sorte qu'elles fassent tourner le corps de vanne (26) d'un angle prédéterminé avant qu'il n'atteigne la position de travail, de sorte que lors d'un nouvel actionnement, le blocage du corps de vanne (26) soit desserré et que le corps de vanne (26) puisse être déplacé dans sa position de base.

12. Vanne d'inversion selon l'une quelconque des revendications 1 à 11, **caractérisée en ce que** le corps de vanne (26) peut être déplacé de la position de base dans la position de travail à l'encontre de la force de rappel d'un élément de ressort (41).

13. Vanne d'inversion selon l'une quelconque des revendications 1 à 12, **caractérisée en ce que** le corps de vanne (26) présente une tête de vanne (27) qui est montée sur une tige (32) du corps de vanne (26) de manière déplaçable axialement et/ou de manière rotative.

14. Vanne d'inversion selon la revendication 13, **caractérisée en ce que** la tête de vanne (27) est isolée hermétiquement et de manière déplaçable par rapport à la tige (32).

15. Vanne d'inversion selon la revendication 13 ou 14, **caractérisée en ce qu'**un élément de ressort (42) est disposé sur la tige (32) du corps de vanne (26), lequel est en liaison coopérante avec la tête de vanne (27) et serre la tête de vanne (27) dans la position de travail de la vanne (V) contre un siège de vanne (53).

16. Robinetterie sanitaire comprenant une vanne d'inversion (V) selon l'une quelconque des revendications 1 à 5.

17. Robinetterie sanitaire selon la revendication 16, **caractérisée en ce que** la vanne d'inversion (V) est disposée dans un boîtier (2) et **en ce que** les moyens d'actionnement (22) présentent une touche qui dépasse dans la position de base sur le boîtier (2) et qui est essentiellement en affleurement avec le côté extérieur du boîtier (2) dans la position de travail.

18. Robinetterie sanitaire selon la revendication 16 ou 17, **caractérisée en ce qu'**elle présente une tête de douche dans laquelle est disposée la vanne d'inversion (V).

19. Tête de douche comprenant une vanne d'inversion (V) selon l'une quelconque des revendications 1 à 15.
